# EUROPÄISCHE PATENTSCHRIFT

(11) **EP 0 990 545 B1**
(45) Veröffentlichungstag und Bekanntmachung des Hinweises auf die Patenterteilung: **19.12.2001**
(21) Anmeldenummer: 98118475.7
(22) Anmeldetag: 30.09.1998
(51) Int. Cl.: B60J 7/12

(54) **Kraftfahrzeugverdecksystem**
Soft-top arrangement for motor vehicle
Construction de capote pour véhicule convertible

(43) Veröffentlichungstag der Anmeldung: 05.04.2000
(73) Patentinhaber: Dura Convertible Systems GmbH, 50735 Köln (DE)
(72) Erfinder: Mac Farland, David, Dipl.-Ing., 85716 Unterschleissheim (DE)
(74) Vertreter: Strobel, Wolfgang, Dipl.-Ing.

(56) Entgegenhaltungen:
- DE-A- 19 613 356
- US-A- 5 207 474

## Beschreibung

Die vorliegende Erfindung betrifft ein Kraftfahrzeugverdecksystem, insbesondere für Cabriolets, nach dem Oberbegriff des Anspruchs 1.

Offene Kraftfahrzeuge, in Form von Cabriolets, erfreuen sich steigender Beliebtheit. Dabei werden die Fahrzeuge zunehmend nicht nur als reine "Schönwetter"-Fahrzeuge in der warmen Jahreszeit eingesetzt, sondern müssen auch für alle Witterungsbedingungen tauglich sein, um als Alternative gegenüber herkömmlichen Limousinenfahrzeugen oder Coupés bestehen zu können.

Dies bedeutet jedoch, daß einerseits stabile Verdecksysteme notwendig sind, die gegenüber allen Witterungsbedingungen, insbesondere im Winter gegen Schnee und Eis beständig sind, und andererseits jederzeit, sozusagen bei jedem warmen Sonnenstrahl, gleich in welcher Jahreszeit, schnell und einfach geöffnet und anschließend wieder geschlossen werden können.

Aufgrund der Anforderung des alltäglichen Einsatzes derartiger Fahrzeuge, werden weiterhin gesteigerte Anforderungen an die Möglichkeit der Zuladung gestellt, um auch größere Mengen von Gepäck und von Einkäufen für den Haushalt und die Wohnung aufnehmen zu können.

Aus der gattungsbildenden DE 196 13 356 A1 ist ein Kraftfahrzeugverdecksystem für Cabriolets bekannt, das aus einem Dachrahmen besteht, über den ein Verdeckbezug gespannt ist. Der Dachrahmen setzt sich hierbei aus drei - jeweils auf beiden Seiten der Karosserie identischen - Gestängeabschnitten zusammen. Der Öffnungsvorgang des Fahrzeugverdecks erfolgt durch Zurückklappen des Gestänges des dritten, hinteren Gestängeabschnittes in Richtung Fahrzeugheck, wobei der zweite, mittlere Gestängeabschnitt des Verdeckes sich nach dem Klappmesserprinzip bezüglich des dritten Gestängeabschnittes bewegt. Gleichzeitig hierzu wird der erste, vordere Gestängeabschnitt des Dachrahmens mittels einer Parallelogrammlenkeranordnung aus zwei zueinander parallel angeordneten Lenkern über den zweiten Gestängeabschnitt hochgeschwenkt, so daß schließlich in der eingeklappten Endstellung alle drei Gestängeabschnitte im wesentlichen übereinander liegen. Die Steuerung des Hochschwenkens des ersten Gestängeabschnitts des Dachrahmens erfolgt über einen Steuerhebel des dritten Gestängeabschnitts, der über einen in ein Langloch des hinteren Lenkers hineinragenden Zapfen die mechanische Führung des ersten Gestängeabschnitts übernimmt.

Aus der US 5,207,474 ist ein weiteres Kraftfahrzeugverdecksystem bekannt, bei dem ein Teil des Kraftfahrzeugverdecksystems über eine Parallelogrammlenkeranordnung nach hinten geführt wird. In einer Ausführungsform besteht der Dachrahmen aus zwei Gestängeabschnitten und einer Hardtop-Schale, die über zwei Lenker am vorderen Gestängeabschnitt angelenkt ist. Die beiden Gestängeabschnitte werden schließlich wiederum nach dem Klappmesserprinzip aufeinander gestapelt.

Der vorliegenden Erfindung liegt die Aufgabe zugrunde, ein Kraftfahrzeugverdecksystem zu schaffen, das auf einfache Weise einfaltbar und ausfaltbar ist, wobei es in zusammengefalteter Stellung eine äußerst platzsparende Ausgestaltung aufweist und sich insbesondere auch für viersitzige offene Kraftfahrzeuge eignet. Gleichzeitig soll die mechanische Beanspruchung der Komponenten des Systems möglichst gering gehalten werden, um frühzeitigen Verschleißerscheinungen vorzubeugen, und die resultierende Gesamthöhe beim Öffnungs- bzw. Schließvorgang minimiert werden.

Diese Aufgabe wird durch die Merkmale des Anspruchs 1 gelöst.

Dadurch, daß der erste, vordere Gestängeabschnitt an einer Gelenkstrebe und entlang dieser bewegbar angeordnet ist, die gelenkig am dritten, hinteren Gestängeabschnitt angeordnet ist, wird eine besonders einfache, sowohl beim Öffnungs- und Schließvorgang als auch in der eingeklappten Stellung äußerst platzsparende Ausgestaltung des Kraftfahrzeugsystems erreicht, ohne daß Teile des Systems enormen Hebelkräften ausgesetzt sind.

Vorteilhafterweise ist der zweite, mittlere Gestängeabschnitt an dem dritten Gestängeabschitt gelenkig angeordnet, so daß der zweite, mittlere Gestängeabschnitt zu dem dritten, hinteren Gestängeabschnitt klappbar ist und besonders platzsparend eingeklappt werden kann.

Der dritte, hintere Gestängeabschnitt ist erfindungsgemäß besonders einfach ausgestaltet. Er weist je Fahrzeugseite zwei Gelenkstreben auf, die an jedem einen Ende am Fahrzeug an benachbarten Stellen gelenkig gelagert sind.

Vorteilhafterweise sind die Gelenkstreben des dritten, hinteren Gestängeabschnitts zur Fahrzeugfront hin gebogen ausgebildet, wodurch eine hervorragende Anpassung an die Verdeckkontur erreicht wird und zusätzlich beim Verschwenken nach hinten die platzsparende Ausgestaltung erhöht wird.

Weiterhin ist vorteilhaft, daß die benachbarten Anlenkstellen am Fahrzeug des dritten, hinteren Gestängeabschnitts in horizontaler und/oder in vertikaler Richtung versetzt angeordnet sind. Dies ermöglicht einen besonders einfachen Klappmechanismus.

Weiterhin sind die Gelenkstreben des dritten, hinteren Gestängeabschnitts über weitere Gelenkhebel gelenkig miteinander verbunden, wodurch eine optimale Klappgeometrie erreicht werden kann.

Insbesondere sind beide Gelenkstreben pro Fahrzeugseite des dritten, hinteren Gestängeabschnitts jeweils über zwei Gelenkhebel mit dem jeweils zugeordneten ersten, vorderen und zweiten, mittleren Gestängeabschnitt gelenkig verbunden.

Vorteilhafterweise weist jeder Gestängeabschnitt pro Fahrzeugseite ein Stützelement auf, das an der Außenkante der zugeordneten Fensterscheibe/n des Fahrzeugs in dichtende Weise anlegbar ist.

Weitere Einzelheiten, Merkmale und Vorteile der vorliegenden Erfindung ergeben sich aus der nachfolgenden Beschreibung unter Bezugnahme auf die Zeichnung. Darin zeigt:
- Figur 1: in schematischer Seitenansicht ein erfindungsgemäßes Kraftfahrzeugverdecksystem in geschlossenem Zustand des Verdecks;
- Figur 2: das erfindungsgemäße Kraftfahrzeugverdecksystem von Figur 1 in einer ersten leicht geöffneten Stellung des Verdecks;
- Figur 3: das erfindungsgemäße Kraftfahrzeugverdecksystem von Figur 1 in einer deutlich geöffneten Stellung des Verdecks;
- Figur 4: das erfindungsgemäße Kraftfahrzeugverdecksystem von Figur 1 in einer fast eingeklappten Stellung des Kraftfahrzeugverdecksystems;
- Figur 5: das erfindungsgemäße Kraftfahrzeugverdecksystem in eingeklappter Stellung.

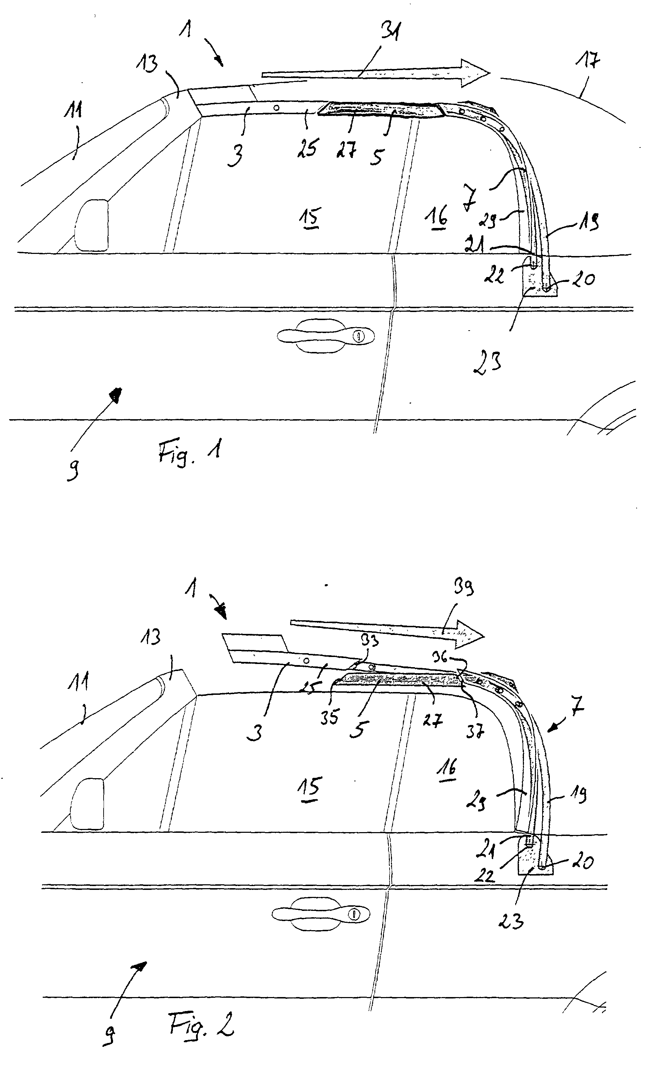

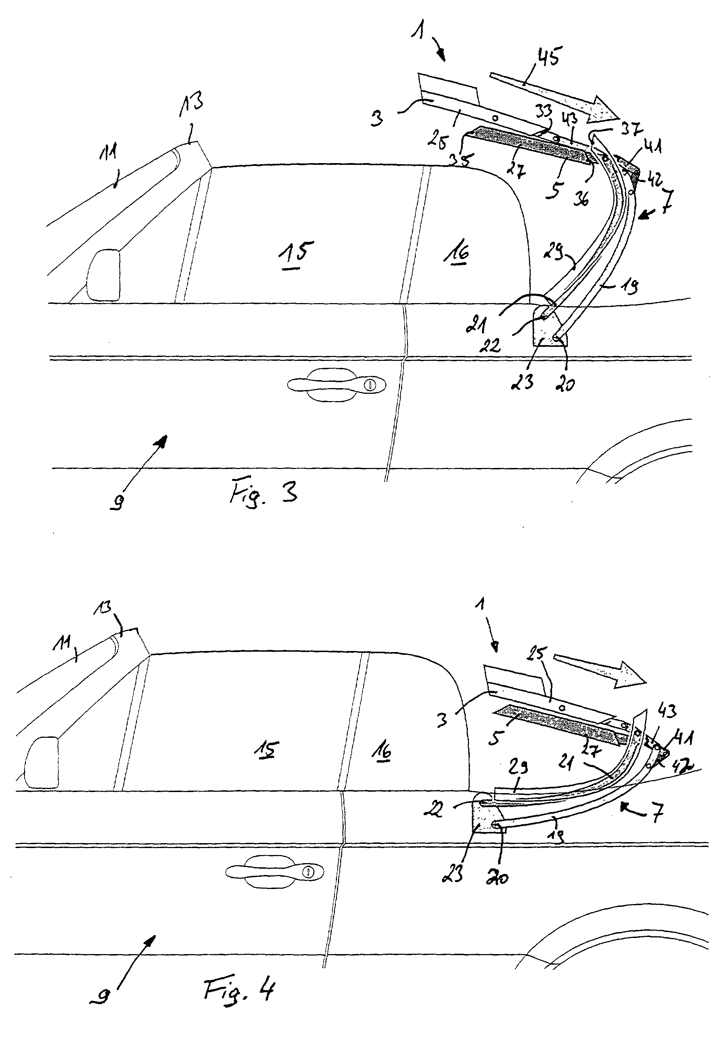

In der nachfolgenden Beschreibung wird ein erfindungsgemäßes Kraftfahrzeugverdecksystem 1 unter Bezugnahme auf die Figuren 1 bis 5 beschrieben. Dabei sind gleiche Elemente mit gleichen Bezugsziffern bezeichnet.

In den Figuren 1 bis 5 wird eine bevorzugte Ausführungsform des erfindungsgemäßen Kraftfahrzeugverdecksystems 1 in schematischer Weise von einer geschlossenen Stellung des Verdecks bis in eine vollständig eingeklappte Stellung des Verdecks gezeigt, in der die gewünschte offene Verdeckstellung des Fahrzeugs erreicht ist.

Das erfindungsgemäße Kraftfahrzeugverdecksystem 1 weist einen ersten, vorderen Gestängeabschnitt 3, einen zweiten, mittleren Gestängeabschnitt 5 und einen dritten, hinteren Gestängeabschnitt 7 auf.

In üblicher Weise weist ein Kraftfahrzeug 9 eine Windschutzscheibe 11 auf, die von einem Windlauf 13 am oberen Rand eingefaßt ist.

In geschlossener Verdeckstellung gemäß Fig. 1 ist der erste, vordere Gestängeabschnitt 3 in dichtender Anlage sowohl an den Windlauf 13 als auch an das Seitenfenster 15 des Kraftfahrzeugs 9 gesetzt und im geschlosssenen Zustand im Bereich des Windlaufs 13 mit diesem verbunden bzw. verriegelt.

Aus Gründen einer vereinfachten und klaren Darstellung sind die üblicherweise vorhandenen Querspriegel, die mit den jeweiligen Gestängeabschnitten verbunden sind und zum Aufspannen des Verdecks 17 dienen, nicht dargestellt. Das Verdeck 17 ist lediglich schematisch angedeutet.

An dem ersten, vorderen Gestängeabschnitt 3 anschließend ist in Fahrzeugheckrichtung der zweite, mittlere Gestängeabschnitt 5 vorgesehen, an den sich der dritte, hintere Gestängeabschnitt 7 anschließt. Der dritte, hintere Gestängeabschnitt 7 weist zwei in Fahrzeugfrontrichtung gebogene Gelenkstreben 19 und 21 auf, die mit ihren jeweiligen unteren Enden 20 bzw. 22 gelenkig an einem Lager 23 angeordnet sind. Das Lager 23 ist seinerseits mit dem Kraftfahrzeug 9 verbunden.

Der erste, vordere Gestängeabschnitt 3 weist ein dichtendes Abstützelement 25 auf, das zur dichtenden Abstützung des Verdecks in seinem Bereich auf dem Seitenfenster 15 dient. Der zweite, mittlere Gestängeabschnitt 5 weist ebenfalls ein dichtendes Abstützelement 27, mit der gleichen Funktion auf und der dritte, hintere Gestängeabschnitt 7 weist ebenfalls ein dichtendes Abstützelement 29 auf, das der Kontur des hinteren Seitenfensters 16 entsprechend folgt.

Die schematische Darstellung von Fig. 1 des erfindungsgemäßen Kraftfahrzeugverdecksystems 1 zeigt nur die eine Seite des Verdecksystems. Spiegelbildlich dazu befindet sich auf der anderen Seite des Kraftfahrzeugs 9 die entsprechend ausgestaltete andere Hälfte des Systems.

Nachfolgend werden nunmehr unter Bezugnahme auf die Figuren 2 bis 5 die einzelnen Stadien des Öffnens des erfindungsgemäßen Kraftfahrzeugverdecksystems 1 beschrieben, das sich wie in Fig. 1 gemäß Pfeil 31 angedeutet nach hinten öffnen läßt.

In Fig. 2 ist das erfindungsgemäße Kraftfahrzeugverdecksystem 1 in leicht geöffneter Stellung dargestellt. Beim Verschwenken des dritten, hinteren Gestängeabschnitts 7 nach hinten werden sowohl der zweite, mittlere Gestängeabschnitt 5 als auch der erste, vordere Gestängeabschnitt 3 von den Seitenfenstern 15 und 16 abgehoben, wobei zusätzlich der erste, vordere Gestängeabschnitt 3 weiter nach oben verschwenkt wird. Dabei bewegt er sich bis oberhalb des zweiten, mittleren Gestängeabschnitts 5.

Wie weiterhin gut erkennbar weisen die dichtenden Abstützelemente 25, 27 und 29 zueinander komplementär abgeschrägte Verbindungsflächen 33, 35, 36 und 37 auf.

Das erfindungsgemäße Kraftfahrzeugverdecksystem 1 wird nunmehr gemäß Pfeil 39 weiter nach hinten verschwenkt, wobei es in eine Stellung gemäß Fig. 3 gelangt.

Wie aus Fig. 3 ersichtlich hat sich der erste, vordere Gestängeabschnitt 3 über den zweiten, mittleren Gestängeabschnitt 5 in Richtung auf den dritten, hinteren Gestängeabschnitt 7 bewegt. Der zweite, mittlere Gestängeabschnitt 5 klappt dabei nur gelenkig um den hinteren, dritten Gestängeabschnitt 7. Wie aus Fig. 3 ersichtlich, ist der zweite, mittlere Gestängeabschnitt 5 über zwei Gelenkhebel 41 und 42 mit der gebogenen Gelenkstrebe 19, also der hintersten Gelenkstrebe gelenkig verbunden.

Der erste, vordere Gestängeabschnitt 3 ist über einen Gelenkhebel 43 mit dem dritten, hinteren Gestängeabschnitt 7 verbunden.

Gemäß Pfeil 45 wird das erfindungsgemäße Kraftfahrzeugverdecksystem 1 weiter nach hinten verschwenkt und kommt in die Stellung gemäß Fig. 4.

Wie aus Fig. 4 ersichtlich wird aufgrund der Hebelgeometrie und der Gestängegeometrie, insbesondere der gebogenen Gelenkstreben 19 und 20 eine im wesentlichen parallele Ausrichtung zwischen erstem, vorderem Gestängeabschnitt 3 und zweitem, mittlerem Gestängeabschnitt 5 erzeugt, wobei sich der erste, vordere Gestängeabschnitt 3 weiter über den zweiten, mittleren Gestängeabschnitt 5 in Richtung dritten, hinteren Gestängeabschnitt 7 bewegt hat.

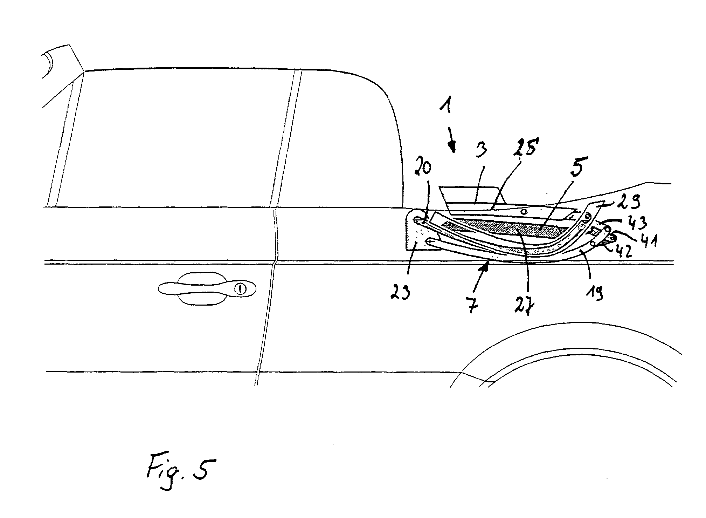

In Fig. 5 ist schließlich die voll eingeklappte Stellung des erfindungsgemäßen Kraftfahrzeugverdecksystems 1 dargestellt. Dabei kommen der erste, vordere Gestängeabschnitt 3, der zweite, mittlere Gestängeabschnitt 5 und der dritte, hintere Gestängeabschnitt 7 im wesentlichen übereinander zu liegen, wodurch eine äußerst platzsparende Konstruktion des Kraftfahrzeugverdecksystems 1 erreicht ist. Dabei ist ersichtlich, daß durch die verbleibende konvexe Krümmung der Querspriegel im Bereich des ersten und zweiten Gestängeabschnitts 3 und 5 und damit auch des entsprechenden Verdeckabschnitts dieses Verdeck sehr weit abgesenkt werden kann und damit nicht über den Heckabschnitt des Kraftfahrzeugs 9 hervorsteht. Nachteilige Windgeräusche und ein erhöhter Luftwiderstand werden dadurch ersichtlich vermieden.

Mit Hilfe der vorliegenden Erfindung wird somit ein Kraftfahrzeugverdecksystem geschaffen, das sich insbesondere für viersitzige Cabriolets eignet, die zwangsweise einen längeren Dachabschnitt aufweisen müssen.

## Patentansprüche

1. Kraftfahrzeugverdecksystem (1), insbesondere für Cabriolets, mit
einem faltbaren Verdeck (17), einem Gestänge, das gelenkig gelagerte Gestängestreben aufweist, und mehreren Querspriegeln, die sich in Querrichtung des Fahrzeugs erstrecken und mit den Gestängestreben entsprechend verbunden sind, wobei ein erster, vorderer Gestängeabschnitt (3) beim Verschwenken des Verdecksystems von einer geschlossenen Dachstellung in eine offene Dachstellung über einen zweiten, mittleren Gestängeabschnitt (5) hoch schwenkbar ist und, während er zusammen mit dem zweiten, mittleren Gestängeabschnitt (5) in Fahrzeugheckrichtung mittels eines dritten, hinteren Gestängeabschnitts (7) verschwenkt wird, sich über den zweiten, mittleren Gestängeabschnitt (5) bewegt, bis alle drei Gestängeabschnitte (3, 5, 7) in eingeklappter Endstellung im wesentlichen übereinanderliegen,
**dadurch gekennzeichnet, daß**
der erste, vordere Gestängeabschnitt (3) an einer Gelenkstrebe (43) und entlang dieser bewegbar angeordnet ist, die gelenkig am dritten, hinteren Gestängeabschnitt (7) angeordnet ist.

2. Kraftfahrzeugverdecksystem nach Anspruch 1, **dadurch gekennzeichnet, daß** der zweite, mittlere Gestängeabschnitt (5) an dem dritten, hinteren Gestängeabschnitt (7) gelenkig angeordnet ist.

3. Kraftfahrzeugverdecksystem nach Anspruch 1 oder 2, **dadurch gekennzeichnet, daß** der dritte, hintere Gestängeabschnitt (7) je Fahrzeugseite zwei Gelenkstreben (19, 21) aufweist, die an ihrem einen Ende am Fahrzeug (9) an benachbarten Stellen gelenkig gelagert sind.

4. Kraftfahrzeugverdecksystem nach einem der Ansprüche 1 bis 3, **dadurch gekennzeichnet, daß** die Gelenkstreben (19, 21) des dritten, hinteren Gestängeabschnitts (7) zur Fahrzeugfront hin gebogen ausgebildet sind.

5. Kraftfahrzeugverdecksystem nach Anspruch 3 oder 4, **dadurch gekennzeichnet, daß** die benachbarten Anlenkstellen (20, 22) am Fahrzeug des dritten, hinteren Gestängeabschnitts (7) in horizontaler und/oder in vertikaler Richtung versetzt angeordnet sind.

6. Kraftfahrzeugverdecksystem nach einem der Ansprüche 1 bis 5, **dadurch gekennzeichnet, daß** die Gelenkstreben (19, 21) des dritten, hinteren Gestängeabschnitts (7) über weitere Gelenkhebel gelenkig miteinander verbunden sind.

7. Kraftfahrzeugverdecksystem nach einem der Ansprüche 1 bis 6, **dadurch gekennzeichnet, daß** der zweite, mittlere Gestängeabschnitt (5) über zwei Gelenkhebel (41, 42) mit der Gelenkstrebe (19) des dritten, hinteren Gestängeabschnitts (7) gelenkig verbunden ist.

8. Kraftfahrzeugverdecksystem nach einem der Ansprüche 1 bis 7, **dadurch gekennzeichnet, daß** jeder Gestängeabschnitt (3, 5 ,7) ein dichtendes Abstützelement (25, 27, 29) zur dichtenden Anlage an den entsprechenden Fensterabschnitt der seitlichen Fenster (15, 16) aufweist.

## Claims

1. Motor vehicle covering system (1), especially for convertibles, comprising
a foldable cover (17), a rod assembly that comprises hinged rod supports, and several transverse roof arches that progress in a transverse direction along the vehicle and are suitably connected to the rod supports, wherein a first, front rod assembly section (3) can be pivoted up over a second, central rod assembly section (5) when the covering system is shifted from a closed top position to an open top position and, while being pivoted together with the second, central rod assembly section (5) in the direction of the tail of the vehicle by means of a third, rear rod assembly section (7), moves over the second, central rod assembly section (5) until all three rod assembly sections (3, 5, 7) are essentially lying on top of one another in a folded terminal position,
**characterised in that**
the first, front rod assembly section (3) is arranged on an articulated support (43) and is movable along this support which is hinged on the third, rear rod assembly section (7).

2. Motor vehicle covering system according to claim 1, **characterised in that** the second, central rod assembly section (5) is hinged on the third, rear rod assembly section (7).

3. Motor vehicle covering system according to claim 1 or 2, **characterised in that** the third, rear rod assembly section (7) on each side of the vehicle comprises two articulated supports (19, 21) which are hinged at one end to the vehicle (9) at adjacent points.

4. Motor vehicle covering system according to one of claims 1 to 3, **characterised in that** the articulated supports (19, 21) of the third, rear rod assembly section (7) are curved toward the front of the vehicle.

5. Motor vehicle covering system according to claim 3 or 4, **characterised in that** the adjacent points (20, 22) at which the third, rear rod assembly section (7) is linked to the vehicle are arranged in horizontal and/or vertical direction in a staggered manner.

6. Motor vehicle covering system according to one of claims 1 to 5, **characterised in that** the articulated supports (19, 21) of the third, rear rod assembly section (7) are hinged together by means of additional articulated levers.

7. Motor vehicle covering system according to one of claims 1 to 6, **characterised in that** the second, central rod assembly section (5) is hinged to the articulated support (19) of the third, rear rod assembly section (7) by means of two articulated levers (41, 42).

8. Motor vehicle covering system according to one of claims 1 to 7, **characterised in that** each rod assembly section (3, 5, 7) comprises a sealing support element (25, 27, 29) to provide a seal against the corresponding window segment of the side windows (15, 16).

## Revendications

1. Système de toit (1) de véhicule automobile, notamment pour cabriolet, comprenant
un toit repliable (17), un mécanisme articulé, qui comprend des barres de mécanisme articulé montées d'une manière articulée, et plusieurs arceaux transversaux qui s'étendent suivant la direction transversale du véhicule et sont reliés d'une manière appropriée aux barres de mécanisme articulé, une première section, avant, de mécanisme articulé (3) pouvant faire l'objet, lors d'un basculement du système de toit d'une position de toit fermée à une position de toit ouverte, d'un basculement vers le haut au-dessus d'une deuxième section, centrale, de mécanisme articulé (5), et se déplaçant au-dessus de la deuxième section, centrale, de mécanisme articulé (5), pendant qu'elle est basculée en commun avec la deuxième section, centrale, de mécanisme articulé (5) en direction de l'arrière du véhicule au moyen d'une troisième section, arrière, de mécanisme articulé (7), jusqu'à ce que les trois sections de mécanisme articulé (3, 5, 7) soient toutes essentiellement superposées en position extrême escamotée,
**caractérisé en ce que**
la première section, avant, de mécanisme articulé (3) est montée sur une barre articulée (43) et d'une manière mobile le long de celle-ci, la barre articulée (43) étant disposée d'une manière articulée sur la troisième section, arrière, de mécanisme articulé (7).

2. Système de toit de véhicule automobile suivant la revendication 1, **caractérisé en ce que** la deuxième section, centrale, de mécanisme articulé (5) est disposée d'une manière articulée sur la troisième section, arrière, de mécanisme articulé (7).

3. Système de toit de véhicule automobile suivant la revendication 1 ou 2, **caractérisé en ce que** la troisième section, arrière, de mécanisme articulé (7) comprend, par côté du véhicule, deux barres articulées (19, 21) qui, à une première extrémité, sont montées d'une manière articulée sur le véhicule (9) en des emplacements voisins.

4. Système de toit de véhicule automobile suivant l'une des revendications 1 à 3, **caractérisé en ce que** les barres articulées (19, 21) de la troisième section, arrière, de mécanisme articulé (7) sont réalisées d'une manière cintrée vers l'avant du véhicule.

5. Système de toit de véhicule automobile suivant la revendication 3 ou 4, **caractérisé en ce que** les emplacements voisins (20, 22) d'articulation de la troisième section, arrière, de mécanisme articulé (7) sur le véhicule sont disposés d'une manière décalée suivant la direction horizontale et/ou suivant la direction verticale.

6. Système de toit de véhicule automobile suivant l'une des revendications 1 à 5, **caractérisé en ce que** les barres articulées (19, 21) de la troisième section, arrière, de mécanisme articulé (7) sont reliées l'une à l'autre d'une manière articulée par l'intermédiaire d'autres leviers articulés.

7. Système de toit de véhicule automobile suivant l'une des revendications 1 à 6, **caractérisé en ce que** la seconde section, centrale, de mécanisme articulé (5) est reliée d'une manière articulée à la barre articulée (19) de la troisième section, arrière, de mécanisme articulé (7) par l'intermédiaire de deux leviers articulés (41, 42).

8. Système de toit de véhicule automobile suivant l'une des revendications 1 à 7, **caractérisé en ce que** chaque section de mécanisme articulé (3, 5, 7) comporte un élément d'appui étanche (25, 27, 29) servant à l'appui étanche sur la section de glace correspondante des glaces latérales (15, 16).
